# EUROPEAN PATENT APPLICATION

(11) **EP 3 276 772 A1**
(43) Date of publication of application: **31.01.2018**
(21) Application number: 17175716.4
(22) Date of filing: 13.06.2017
(51) Int. Cl.: H02J 3/18, H02J 3/38

(54) **HYBRID POWER PLANT AND METHOD FOR CONTROLLING SUCH A HYBRID POWER PLANT COMBINING A GENERATOR, COMPRISING A COMBUSTION ENGINE, AND A PHOTOVOLTAIC SYSTEM**

(30) Priority: 27.07.2016 NL 2017245
(71) Applicant: Bredenoord B.v., 7325 WT Apeldoorn (NL)
(72) Inventor: BRESSER, Marinus Christiaan, 7325 WT Apeldoorn (NL)
(74) Representative: Peters, Sebastian Martinus

(57) **Abstract**

The invention relates to a hybrid power plant and a method for delivering electricity to an off-the-grid load. The hybrid power plant comprises:
a generator comprising a combustion engine, wherein a power output of the generator is connected to a power plant output arranged for connecting the load to the hybrid power plant,
a photovoltaic system comprising an inverter, wherein a power output of the inverter is connected to the power plant output,
a signal input for receiving a signal from a sensor which is arranged for determining a power factor of the load, and
a control system connected to at least the signal input and the inverter.

The control system is arranged to control the inverter and to adjust a power factor of the power output of the inverter based on the signal from the sensor, which signal is a measure for the power factor of the load.

## Description

### BACKGROUND

The invention relates to a hybrid power plant which combines a generator, comprising a combustion engine, and a photovoltaic system. In addition the invention relates to a method for controlling such a hybrid power plant.

Such a hybrid power plant is, for example, disclosed in EP 2 544 326. This publication describes an arrangement with a photovoltaic generator which is connected to the input terminals of an inverter. An output of the inverter is connected to the public power grid. The arrangement further comprises an asynchronous machine which is driven by a combustion engine, which asynchronous machine is arranged in parallel to the output of the inverter.

Although the use of a driven asynchronous machine for power generation and feed into a public power grid does not appear practical, in particular because a network destabilizing effect may occur. An asynchronous machine typically operates with a power factor (cos phi) of approximately 0.8 and thus in a voltage-reducing manner. This is unacceptable for a network operator, since in order to maintain stability, the network operator demands values of approximately 0.95 for the power factor in order to keep the voltage stable in the network. In the arrangement as disclosed in EP 2 544 326, the asynchronous machine is provided with a signal output for outputting a power factor signal indicative of the power factor at which the asynchronous machine operates. This signal is provided to the control unit which then generates a control signal which is send to the inverter in order adjust the power factor of the inverter in order to compensate for the poor power factor (cos phi) of the asynchronous machine via a reactive power supply by the inverter, in order to supply electricity from the combination of the asynchronous machine and the inverter to the public power grid with a power factor or cos phi of 1, which is acceptable for the network operator of the public power grid. The arrangement as described in EP 2 544 326 is thus optimized for supplying electricity to a public power grid.

It is an object of the present invention to at least provide an alternative power control system and method for controlling a hybrid power plant combining a generator, comprising a combustion engine, and a photovoltaic system. In particular, it is an object of the present invention to provide a power control system which is arranged to minimize fuel consumption of the generator and/or which is optimized for use in an off-the-grid situation, thus is designed to function without the support of the electrical grid

### SUMMARY OF THE INVENTION

According to a first aspect, the invention provides a hybrid power plant for delivering electricity to an off-the-grid load, the hybrid power plant according to the invention comprises:
a generator comprising a combustion engine, wherein a power output of the generator is connected to a power plant output arranged for connecting the load to the hybrid power plant,
a photovoltaic system comprising an inverter, wherein a power output of the inverter is connected to the power plant output,
a signal input for receiving a signal from a sensor which is arranged for determining a power factor of the load, and
a control system connected to at least the signal input and the inverter, wherein the control system is arranged to control the inverter and to adjust a power factor of the power output of the inverter based on the signal from the sensor, which signal is a measure for the power factor of the load.

According to the invention, the hybrid power plant is arranged to control the inverter of the photovoltaic system to deliver electrical power with a power factor which is adjusted on the basis of the power factor of the load. The power factor and thus the amount of reactive power as delivered by the photovoltaic system is adjustable to the power factor and thus to the amount of reactive power as requested by the load. Accordingly, the contribution of the generator to the reactive power as required by the load can be limited. This is particularly advantageous when the electrical power is predominantly generated by the photovoltaic system and the power generated by the generator as reduced to a minimum. Since the contribution of the generator to the reactive power is limited, the generator substantially does not need to operate outside its operating ranges, in particular with respect to the generated current, when the power generated by the generator is reduced to a minimum.

It is noted that in a situation in which the generator only needs to generate a small amount of power, but also would need to generate a large amount of reactive power, high currents may occur and the generator is operated far beyond the normal working conditions, which may result in damage to the generator. According to the present invention, this situation can be circumvented even when the load connected to the hybrid power plant requires a large amount of reactive power. By adjusting the power factor of the inverter on the basis of the actual demand of reactive power by the load as measured by the sensor, the required reactive power is delivered, at least to a large extend, by the inverter and the generator can substantially operate within its normal working parameters.

Accordingly, an advantage of the arrangement of the present invention is, that because the reactive power as requested by the load is, at least to a large extend, provided by the photovoltaic system, the power generated by the generator can be reduced to a minimum. This allows optimizing the hybrid power plant to make optimal use of the power generated by the photovoltaic system and to minimize fuel consumption of the generator, even when the load connected to the hybrid power plant requires a substantial amount of reactive power.

The hybrid power plant according to the invention is highly suitable for use in an off-the-grid electricity system, also known as an island system, stand-alone power system (SAPS or SPS), or remote area power supply (RAPS). Such an off-the-grid electricity system is used for locations that are usually not connected with a public electricity distribution network.

It is noted that the sensor may be arranged at the power plant output. Alternatively the sensor may also be arranged at or be a part of the load. In any case, the sensor is coupled to the signal input of the hybrid power plant.

It is further noted that EP 2544326 neither a hint, nor a suggestion the use of a sensor which is arranged for determining a power factor of the load or to adjust a power factor of the power output of the inverter based on the signal from the sensor, which signal is a measure for the power factor of the load. EP 2544326 teaches the use of a signal output of the asynchronous machine for providing a cos phi signal which is indicative of the power factor at which the asynchronous machine operates, and a sensor for measuring the actual value of supplied current to the public power grid and the prevailing voltage of the power grid.

In an embodiment, the power control system is arranged to adjust the power factor of the power output of the inverter to a value which is substantially equal to the power factor of the load. Thus the amount of reactive power as required by the load is substantially provided by the inverter. Accordingly, the production of reactive power by the generator can be reduced to a minimum, which reduces the generation of heat by the generator and the loss of efficiency.

In an embodiment, the generator comprises a synchronous generator. An advantage of the use of a synchronous generator, in particular in an off-the-grid electricity system, is that the synchronous generator generates a power factor substantially equal to the power factor required by the load connected to the off-the-grid system. However, the adjustment of the generated power factor of the synchronous generator is limited in order to keep the generator in a stable working condition and/or to protect the generator against overload. It is noted that the arrangement disclosed in EP 2544326 uses an asynchronous generator, which usually operates with a fixed lagging power factor of approximately 0,8.

In an embodiment, the power control system is arranged to establish a set point for the actual power to be generated by the photovoltaic system, wherein the power control system is connected to the inverter for providing the set point to the inverter. Preferably, the set point is based on the power output of the generator, or in case of multiple generators, on the combined power output of the generators. Accordingly, in an embodiment, the generator(s) is(are) connected to the control system, wherein the control system is arranged to control the hybrid power plant based on a generator signal from the generator, which generator signal is a measure for the power output of the generator. By using the generator signal as a measure for the power output of the generator, and by controlling the system based on this signal from the generator, the control unit establishes the set point for the photovoltaic system.

In an embodiment, the power control system is arranged to receive a signal from the photovoltaic system, in particular from the inverter, which signal is a measure for the actual generated power by the photovoltaic system. In an embodiment, the signal is a measure for the actual generated power relative to the maximum power which can be generated by the photovoltaic system.

In an embodiment, the power control system comprises a Proportional-Integral-Derivative controller (PID controller) for controlling the power output of the generator. In an embodiment, the PID controller is arranged to minimize the power output of the generator to a minimal setpoint, and preferably to maximize the power output of the photovoltaic system.

According to a second aspect, the invention provides a method for controlling a hybrid power plant combining a generator, comprising a combustion engine, and a photovoltaic system for delivering electricity to an off-the-grid load as described above. The hybrid power plant comprises a generator comprising a combustion engine, wherein a power output of the generator is connected to a power input of the load, a photovoltaic system comprising an inverter, wherein a power output of the inverter is connected to the power input of the load, a sensor which is arranged for determining a power factor of the load, and a power control system connected to the sensor, the inverter and the generator. According to the invention the method comprises the steps of:
receiving a signal from the sensor by the power control system, wherein the signal is a measure for the power factor of the load, and
sending a control signal from the power control system to the inverter, wherein said control signal produces an adjustment of a power factor of the power output of the inverter based on the power factor of the load, and preferably on the output power of the generator.

In an embodiment, said control signal produces an adjustment of the power factor of the power output of the inverter to a value which is substantially equal to the power factor of the load.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 schematically shows a first example of a hybrid power plant according to the present invention,
Figure 2 schematically shows a second example of a hybrid power plant according to the present invention, and
Figure 3 schematically shows a third example of a hybrid power plant according to the present invention.

### DETAILED DESCRIPTION OF THE INVENTION

The present invention relates to a hybrid power plant for delivering electricity to an off-the-grid load on the basis of one or more isochronous generators in combination with a photovoltaic system for generating electrical power from solar energy. Preferably droop speed control of the generators, and battery packs for buffering are not used. As a result, the invention provides an off-the-grid network with a stable fixed voltage and frequency.

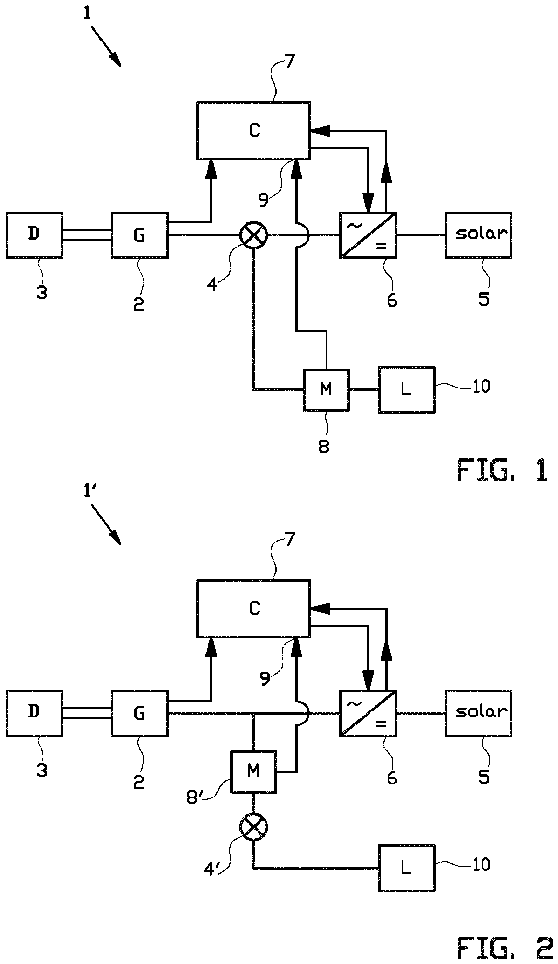

As schematically shown in the examples shown in figures 1 and 2, the hybrid power plant 1, 1' comprises a generator 2 and a combustion engine 3, wherein the combustion engine 3 is mechanically coupled to the generator 2 for mechanically driving the generator 2. Preferably the combustion engine 3 is a diesel engine. The generator 2 comprises a power output which is connected to a power output 4, 4' of the hybrid power plant 1, 1'.

The hybrid power plant 1, 1' further comprises a photovoltaic system 5 and an inverter 6 which changes the DC current as generated by solar panels of the photovoltaic system 5 into AC current. The power output of the inverter 5 is connected to the power output 4, 4' of the hybrid power plant 1, 1'. So the generator 2 and the photovoltaic system 5 are connected in parallel.

In use, a load 10 is connected to the power output 4, 4' of the hybrid power plant 1, 1'. It is noted that in the simplified drawings in figures 1 and 2, the load 10 is represented by one square. In practice, the load 10 represents multiple users. The amount of power needed by each individual user may vary strongly in time, as also the required amount of reactive power. Accordingly, the demand of reactive power and thus the required power factor by the combined multiple users strongly varies in time.

In the example shown in figure 1, the load 10 comprises a sensor 8 which is arranged for determining a power factor of the load 10. In an alternative example shown in figure 2, the hybrid power plant 1 comprises a sensor 8' which is arranged for determining the power factor of the load 10.

Furthermore, the hybrid power plant 1, 1' comprises a power control system 7 connected to the sensor 8, 8', the inverter 6 and the generator 2, wherein the power control system 7 is arranged to control the inverter 6 and to adjust a power factor of the power output of the inverter 6 based on a signal from the sensor 8, 8', which signal is a measure for the power factor of the load 10. The hybrid power plant 1, 1', and in particular the power control system 7 thereof, comprises a signal input 9 for receiving a signal from the sensor 8, 8'.

The examples shown in figures 1, 2 and 3 represent a situation in which the hybrid power plant 1, 1', 1" is arranged as an off-the-grid electricity system is used for locations that are usually not connected with a public electricity distribution network. In such an off-the grid situation, the load 10 connected to the hybrid power plant 1, 1', 1" governs the power factor at which the hybrid power plant 1, 1', 1" operates.

Commonly, the solar inverters operate at a fixed power factor, and any variations in the demand for reactive power by the multiple users represented by the load 10 are commonly provided by the generator 2. The known generators are designed to operate in a range between a leading power factor of 0,97 and a lagging power factor of 0,8 at a nominal power. However, in case the contribution to the produced electrical power of the hybrid power plant 1, 1', 1" by the generator 2 is small, the situation may occur that the generator 2 only needs to generate a small amount of active power but a large amount of reactive power, which would force the generator to operate far beyond the normal working conditions.

According to the present invention, this problem is at least to a large extend solved by using a sensor 8, 8' to measure the actual power factor of the load 10, and to dynamically adjust the power factor of the power output of the inverter 6 based on a signal from the sensor 8, 8', which signal is a measure for the actual power factor of the load 10. Accordingly, the required amount of reactive power is predominantly generated by the inverter 6 and the generator 2 only needs to provide the difference between the required amount of reactive power for the load 10 and the generated reactive power by the inverter 6.

Preferably, the power control system 7 is arranged to adjust the power factor of the power output of the inverter 6 to a value which is substantially equal to the power factor as requested by the load 10. Accordingly, the generator 2 in the hybrid power plant 1, 1', 1" of the invention only need to supply an amount of reactive power which substantially maintains the power factor as provided by the hybrid power plant 1, 1', 1". For example, in case the users, as represented by the load 10, requires a power factor of 0,82 as measured by the sensor 8, 8', the power control system 7 receives a signal from the sensor 8, 8' and sends a control signal to the inverter 6 to adjust the power factor of the power output of the inverter 6 to 0,82. Accordingly the generator 2 will also be loaded with a power factor of 0,82 regardless of the power distribution of the active power between the generator 2 and the photovoltaic system 5. In this case, the power factor of the generator will be an almost equal to the power factor of the power output of the inverter 6 and the desired power factor by the load 10.

It is noted that a solar inverter 6 usually operates on the basis of a reference voltage and frequency. This reference voltage and frequency is provided by the generator 2. In particular the combustion engine 3 is operated at a substantially fixed rotational speed, for example 1500 revolutions/minute, which provides a substantially fixed frequency. The generator 2 is operated to provide a substantially fixed voltage, for example 400 Volts. De combination of combustion engine 3 and generator 2 is thus primarily responsible for the stability of the voltage and the frequency as provided by the hybrid power plant 1, 1', 1".

Preferably, the generator 2 provides at least part of the electrical power as generated by the hybrid power plant 1, 1', 1", in order to provide a stable operation of the hybrid power plant 1, 1', 1", at least with respect to the voltage and frequency. Even in case the available solar energy as can be provided by the photovoltaic system 5 is higher than the demand of electrical power by the load 10, the generator 2 provides a nominal value of electrical power. However in such a case, the hybrid power plant 1, 1', 1" is arranged to minimize the power output of the generator 2.

However, in case that the amount of available solar energy as provided by the photovoltaic system 5 is higher than the demand of electrical power of the load 10, the inverter 6 will still supply all available solar power to the device coupled to the inverter 6, as a result of which the generator 2 changes from a generation of electrical power to a consummation of electrical power, also denoted as 'motor working'. When this occurs, the frequency as provided by the hybrid power plant 1, 1' will go up, which may result in a complete failure of the system.

Because the control of the power factor of the inverter 6 is dynamic, it is also possible to use a non-isochronous generator 2 in the hybrid power plant 1, 1', in particular when the end user has no high demands on frequency stability of the delivered electrical power.

As shown in figures 1, 2 and 3, the power control system 7 is connected with the inverter 6. The power control system 7 is arranged to establish a set point for the actual power to be generated by the photovoltaic system. In use, the set point is send to the inverter 6. In addition, the power control system 7 is arranged to receive a signal from the inverter 6 which allows to determine the actual generated power by the photovoltaic system 5, preferably relative to the maximum power which can be generated by the photovoltaic system 5.

The power control system 7 preferably comprises a PID controller. The PID controller is arranged for establishing the set point, which set point is send to the inverter 6.

In addition, the generator 2 is connected to the control system 7 to send a generator signal to the control system 7. The generator signal is a measure for the power output of the generator 2. The PID controller receives the generator signal and established the set point for the actual power to be generated by the photovoltaic system 5 based on the generator signal. In addition, the PID controller is arranged to minimize the power output of the generator 2, in order to use substantially the maximum available power from the photovoltaic system 5.

Accordingly, the generator 2 is substantially only used for generating a difference in the amount of power as requested by the load 10 and the amount of power generated by the photovoltaic system 5 and delivered by the inverter 6. Accordingly, the hybrid power plant 1, 1', 1" is arranged to reduce the electrical power generated by the generator 2 to a level as low as possible.

As indicated above, the power control system 7 is arranged to receive a signal from the inverter 6, also denoted as the solar power signal. Preferably, this solar power signal is proportional to actual generated power by the photovoltaic system 5. The solar power signal is used as a (feedback) signal for limiting the set point as established by the PID controller in case the amount of power as requested by the load 10 cannot be delivered by the photovoltaic system 5. The feedback arrangement prevents that the PID controller is driven up to its limit, so by up to 100%.

In case of a sudden increase in demand of electrical power from the load 10, this increase is in a first instance provided by the generator 2. The power control system 7 notices this increase by the generator signal from the generator 2, and subsequently adjusts the set point for the actual power to be generated by the photovoltaic system 5 to a higher level such that the photovoltaic system 5 provides more electrical power.

It is noted that the sum of the electrical power as provided by the photovoltaic system 5 and as provided by the generator 2, is substantially equal to the demand of electrical power from the load 10. Thus when the photovoltaic system 5 delivers more electrical power, the electrical power as delivered by the generator 2 reduces, assuming a substantially constant demand of electrical power from the load 10. The reduction of electrical power as delivered by the generator 2 results in a change in the generator signal which is observed by the power control system 7. Subsequently the power control system 7 adjusts the set point for the actual power to be delivered by the photovoltaic system 5, until the generator 2 provides a nominal value of electrical power.

According to the present invention, the power generated by the generator 2 can be controlled by the power control system 7 by adjusting the set point for the photovoltaic system. It is noted that the power control system 7 does not need to send control signals to the combustion engine 3 or the generator 2.

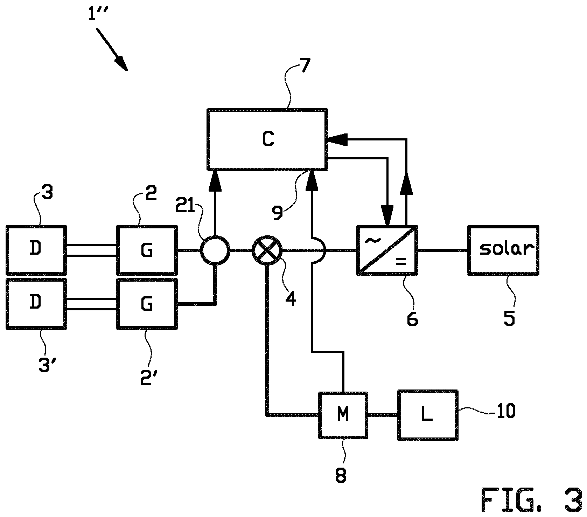

The same method for controlling the hybrid power plant can also be used when the hybrid power plant comprises multiple combinations of a combustion engine 3, 3' and a generator 2, 2' as schematically shown in figure 3. In the example as shown in figure 3, the power generated by the first combination of combustion engine 3 and generator 2 and the power generated by the second combination of combustion engine 3' and generator 2', are connected in parallel, and the generator signal originates from a measuring point 21 which provides a measure for the combined power output from both generators 2, 2'.

The hybrid power plant according to the present invention can be run in an off-the-grid situation, in particular using a very low setting for the base load on the generator of, for example, 3 to 5% of the required electrical power and generating the rest of the power demand by the photovoltaic system.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In summary, the invention relates to a hybrid power plant and a method for delivering electricity to an off-the-grid load. The hybrid power plant comprises a generator comprising a combustion engine, wherein a power output of the generator is connected to a power plant output arranged for connecting the load to the hybrid power plant, a photovoltaic system comprising an inverter, wherein a power output of the inverter is connected to the power plant output, a signal input for receiving a signal from a sensor which is arranged for determining a power factor of the load, and a control system connected to at least the signal input and the inverter. The control system is arranged to control the inverter and to adjust a power factor of the power output of the inverter based on the signal from the sensor, which signal is a measure for the power factor of the load.

## Claims

1. A hybrid power plant for delivering electricity to an off-the-grid load, wherein the hybrid power plant comprises:
a generator comprising a combustion engine, wherein a power output of the generator is connected to a power plant output arranged for connecting the load to the hybrid power plant,
a photovoltaic system comprising an inverter, wherein a power output of the inverter is connected to the power plant output,
a signal input for receiving a signal from a sensor which is arranged for determining a power factor of the load, and
a control system connected to at least the signal input and the inverter, wherein the control system is arranged to control the inverter and to adjust a power factor of the power output of the inverter based on the signal from the sensor, which signal is a measure for the power factor of the load.

2. The hybrid power plant according to claim 1, wherein the power control system is arranged to adjust the power factor of the power output of the inverter to a value which is substantially equal to the power factor of the load.

3. The hybrid power plant according to claim 1 or 2, further comprising a sensor for determining a power factor of the load.

4. The hybrid power plant according to claim 3, wherein the sensor is be arranged at the power plant output or at the load.

5. The hybrid power plant according to any one of the claims 1 - 4, wherein the generator comprises a synchronous generator, preferably an isochronous generator.

6. The hybrid power plant according to any one of the claims 1 - 5, wherein the power control system is arranged to establish a set point for the actual power to be generated by the photovoltaic system, wherein the power control system is connected to the inverter for providing the set point to the inverter.

7. The hybrid power plant according to claim 6, wherein the generator is connected to the control system, and wherein the control system is arranged to control the generator based on a generator signal from the generator, which generator signal is a measure for the power output of the generator.

8. The hybrid power plant according to any one of the claims 1 - 7, wherein the power control system is arranged to receive a signal from the inverter, which signal is a measure for the actual generated power by the photovoltaic system, preferably the signal is a measure for the actual generated power relative to the maximum power which can be generated by the photovoltaic system.

9. The hybrid power plant according to claim 6, 7 or 8, wherein the power control system comprises a Proportional-Integral-Derivative controller (PID controller) for controlling the power output of the generator.

10. The hybrid power plant according to claim 9, wherein the PID controller is arranged to minimize the power output of the generator to a minimal setpoint.

11. A method for controlling a hybrid power plant combining a generator, comprising a combustion engine, and a photovoltaic system for delivering electricity to an off-the-grid load, wherein the hybrid power plant comprises:
a generator comprising a combustion engine, wherein a power output of the generator is connected to a power input of the load,
a photovoltaic system comprising an inverter, wherein a power output of the inverter is connected to the power input of the load,
a sensor which is arranged for determining a power factor of the load, and
a power control system connected to the sensor, the inverter and the generator, wherein the method comprises the steps of:
receiving a signal from the sensor by the power control system, wherein the signal is a measure for the power factor of the load, and
sending a control signal from the power control system to the inverter, wherein said control signal produces an adjustment of a power factor of the power output of the inverter based on the power factor of the load and preferably on the output power of the generator.

12. The method according to claim 11, wherein said control signal produces an adjustment of the power factor of the power output of the inverter to a value which is substantially equal to the power factor of the load.
